# EUROPÄISCHE PATENTSCHRIFT

(11) **EP 2 720 977 B1**
(45) Veröffentlichungstag und Bekanntmachung des Hinweises auf die Patenterteilung: **12.08.2015**
(21) Anmeldenummer: 12729096.3
(22) Anmeldetag: 14.06.2012
(51) Int. Cl.: C01B 17/22, H01M 2/16, H01M 4/136, H01M 4/58

(54) **VERFAHREN ZUR HERSTELLUNG EINES KOHLENSTOFFBESCHICHTETEN LITHIUMSULFIDS UND DESSEN VERWENDUNG**
METHOD FOR PRODUCING A CARBON-COATED LITHIUM SULFIDE AND USE THEREOF
PROCÉDÉ DE PRODUCTION D'UN SULFURE DE LITHIUM À REVÊTEMENT CARBONE ET SON UTILISATION

(30) Priorität: 14.06.2011 DE 102011077478
(43) Veröffentlichungstag der Anmeldung: 23.04.2014
(73) Patentinhaber: Rockwood Lithium GmbH, 65926 Frankfurt/M (DE)
(72) Erfinder: WIETELMANN, Ulrich, 61381 Friedrichsdorf (DE)
(74) Vertreter: Rottmayer, Hans
(86) Internationale Anmeldenummer: PCT/EP2012/061058
(87) Internationale Veröffentlichungsnummer: WO 2012/171888

(56) Entgegenhaltungen:
- EP-A1- 0 802 159
- WO-A1-2010/035602
- US-A- 3 615 191
- US-A- 3 642 436
- PEARSON T G ET AL: "LVI. The polysulphides of the, alkali metals. Part II. Lithium", JOURNAL OF THE CHEMICAL SOCIETY, CHEMICAL SOCIETY, LETCHWORTH; GB, 1. Januar 1931 (1931-01-01), Seiten 413-420, XP002686428, ISSN: 0368-1769, DOI: 10.1039/JR9310000413

## Beschreibung

Die Erfindung betrifft ein Verfahren zur Herstellung eines kohlenstoffbeschichteten Lithiumsulfid und dessen Verwendung.

Wiederaufladbare elektrochemische Speichersysteme erlangen gegenwärtig für viele Bereiche des täglichen Lebens eine steigende Bedeutung. Neben den schon seit längerem bestehenden Anwendungen als Automobilstarterbatterie und als Energiequelle für die portable Elektronik werden in der Zukunft starke Zuwächse für den Antrieb von Elektroautos und für die stationäre Energiespeicherung vorhergesagt. Für die neuen Anwendungen kommen traditionelle Blei/Schwefelsäureakkumulatoren nicht in Frage, weil sie eine viel zu geringe Kapazität aufweisen und nicht genügend häufig zyklisierbar sind. Beste Chancen werden dagegen Lithiumbatterien eingeräumt.

Lithiumakkumulatoren nach Stand der Technik haben jedoch ebenfalls für viele Anwendungen eine zu geringe Energiespeicherfähigkeit. Heutige Lithiumionenbatterien weisen spezifische Energiedichten zwischen etwa 100 und 250 Wh/kg auf. Außerdem enthalten sie zumeist teure Elemente wie Kobalt und/oder Nickel. Weitaus höhere (theoretische) Energiedichten weisen Lithium/Schwefel- und Lithium/Luft-Systeme auf:

| Batteriesystem | theoretische Energiedichte | |
|---|---|---|
| | Wh / L | Wh / kg |
| Li-ion (LiC₆ / Ni, Mn, Co-oxid) | 1710 | 510 |
| Lithium / Schwefel | 2710 | 2450 |
| Lithium / Luft | | 5830 |

Die technischen Herausforderungen bei der Entwicklung von Li/Luftsystemen sind noch derartig gravierend, dass erst frühestens in 10-20 Jahren mit einem marktreifen System gerechnet werden kann (M. Jacoby, Chem. Eng. News Nov. 22 (2010) 29-31). Deutlich günstiger sehen die Chancen beim Lithium/Schwefelsystem aus. Nachteilig an diesem System ist die Verwendung von Lithiummetallanoden. Lithiummetall ist im Vergleich zu salzartigen Materialien oder dem in Lithiumionenbatterien verwendeten Graphit relativ teuer. Außerdem hat diese Batterie noch den Nachteil, dass sie beim Laden und Entladen zu schnell an Kapazität verliert.

Es wurde deshalb vorgeschlagen, die Lithium/Schwefelbatterie im entladenen Zustand zusammenzubauen, d.h. als Anode wird ein lithiumfreies (oder-armes) Material, z.B. ein Zinn/Kohlenstoffkomposit verwendet und als Kathode Lithiumsulfid (B. Scrosati, Angew. Chem. 2010, 122, 2421-4). Leider erweist sich diese Batteriekonfiguration ebenfalls als wenig zyklenstabil. Der Hauptgrund wird darin gesehen, dass sich beim Zyklen lösliche Oligoschwefelverbindungen (z.B. Li₂S₃ und Li₂S₄) bilden können. Dadurch verliert die Kathode an redoxaktivem Material. (Y. Li, J. Power Sources 195 (2010) 2945-9; D. Aurbach, J. Electrochem. Soc. 156(8), A694-A702 (2009)). Um die Leitfähigkeit des Kathodenmaterials (Schwefel oder Lithiumsulfid) zu verbessern, wird häufig auf eine Kompositbildung mit Kohlenstoff zurückgegriffen. So wird von T. Takeuchi beschrieben, dass käufliches Lithiumsulfidpulver durch ein Lichtbogen-Plasmaverfahren mit graphitischem Kohlenstoff beschichtet werden kann (J. Electrochem. Soc. 157 (11) A1196-A1201 (2010)). Derartige Beschichtungsverfahren sind aber energieaufwändig, erfordern teure Beschichtungsapparate und Hochvakuumtechnik und sie sind demzufolge mit hohen Kosten verbunden. Ein anderer Weg, Li₂S/C-Komposite herzustellen, geht über Vermahlung des kommerziell verfügbaren Lithiumsulfidpulvers, beispielsweise in einer Kugelmühle (B. Scrosati, Angew. Chem. 2010, 122, 2421-4). Mahlprozesse sind in der Technik ebenfalls recht aufwändig und setzen die Verfügbarkeit der fertigen Komponenten voraus. Lithiumsulfid lässt sich zwar über den Chemikalienhandel beziehen, jedoch nur zu hohen Preisen z. B. von Firma Alfa Aesar 50 g für € 560,00, Listenpreis, Katalogausgabe 2011-13. Schließlich ist es bekannt, dass bei der Umsetzung von Lithium mit Schwefel in siedendem Naphthalin ein mit freiem Metall (elementarem Lithium), Carbiden und Polysulfiden verunreinigtes Hauptprodukt der ungefähren Zusammensetzung Li₂S entsteht (T.G. Pearson und P.L. Robinson, J. Chem. Soc. 1931, 413-420).

Aus den Dokumenten US 3,642,436 und US 3,615,191 sind Verfahren zur Herstellung von Lithiumsulfid bekannt, die die Umsetzung von Hydrogensulfid mit einer feinteiligen Lithiummetall oder Lithiumhydrid in Ethern unter inert Bedingunger beschreiben. Weiterhin ist die Herstellung von Lithiumsulfid aus Lithiumhydroxid und gasförmigen Schwefel aus dem Dokument EP 0 802 159 A1 bekannt. Weiterhin wird im Dokument WO 2010/035602 A1 ein Lithiumsulfid-Kohlenstoff-Komposit und ein Verfahren zu dessen Herstellung beschrieben, bei dem das Komposit mit einem Kohlenstoffgehalt von 15 bis 70 Gew.-% dadurch erhalten wird, dass eine Mischung von Lithiumsulfid und Kohlenstoffmaterial in einem elektrischen Schmelzverfahren unter nicht oxidativen Bedingungen und unter Druck umgesetzt wird.

basierten Lösungsmittel und bei Temperaturen über ca. 120°C bis 300°C, bevorzugt über 150°C bis 250°C und besonders bevorzugt über 180°C bis 200°C miteinander umgesetzt. Das Lösungsmittel wird bevorzugt aus der Gruppe gesättigter Kohlenwasserstoffe ausgewählt. Es wurde überraschend gefunden, dass bei der Verwendung gesättigter Kohlenwasserstoffe als Lösemittel ein phasenreines mit nicht-kristallinem ("röntgenamorphem") Kohlenstoff beschichtetes oder dotiertes Produkt entsteht. Dagegen resultieren beim Einsatz von aromatischen oder teilaromatischen Lösungsmitteln häufig mit Lithiumcarbid oder Lithiumhydrid verunreinigte Produkte. Außerdem ist die Reaktion in Aromaten oder Teilaromaten mitunter gehemmt, wie der Restgehalt an elementarem Lithium anzeigt. Bevorzugt werden Lösungsmittel verwendet, die bei den Umsetzungsbedingungen flüssig sind, die also Siedepunkte von mindestens 120°C, besser mindestens 150°C und besonders bevorzugt Siedepunkte > 180°C aufweisen. Beispiele sind: Octan, Nonan, Decan, Undekan, Dodecan öder beliebige Mischungen dieser genannten Verbindungen, egal ob linear, verzweigt oder zyklisch. Ganz besonders bevorzugt sind kommerziell erhältliche Paraffin-Siedeschnitte, wie z.B. Shellsol^{®}D70 oder D100.

Der Kohlenstoffgehalt der erfindungsgemäßen Materialien liegt zwischen 0,5 und 50 %, bevorzugt zwischen 1 und 20 %. Er lässt sich durch Wahl der Reaktionsbedingungen (vor allem der Temperatur) sowie durch die Wahl des Schwefelrohstoffes gezielt variieren. Höhere Kohlenstoffgehalte werden insbesondere dadurch erzielt, dass kohlenstoffhaltige Schwefelverbindungen, bevorzugt Kohlenstoffdisulfid (CS₂) und/oder Carbonylsulfid (COS) eingesetzt werden. Die Reaktion kann unter alleinigem Einsatz dieser Verbindungen als Schwefelquelle gem.

4 Li + CS₂ → 2 Li₂S + C

oder

4 Li + COS → Li₂S + Li₂O + C

erfolgen. In einer ganz besonders bevorzugten Ausführungsform wird eine Mischung aus elementarem Schwefel und Kohlenstoffdisulfid verwendet. Das zu wählende Mölverhältnis richtet sich nach dem gewünschten C-Gehalt. Im allgemeinen kann das Molverhältnis Schwefel zu Kohlenstoffdisulfid zwischen 99 : 1 und 1 : 99 variieren, besonders bevorzugt zwischen 50 : 50 und 95 : 5. Es ist bevorzugt, dass die Schwefelquelle mindestens mit der für eine vollständige Umsetzung notwendigen Stöchiometrie oder im Überschuss (1 bis 30%) eingesetzt wird.

Vorzugsweise wird das erfindungsgemäße Verfahren als einstufiges Verfahren insbesondere als Eintopfverfahren durchgeführt.

Das erfindungsgemäße Produkt ist durch eine hohe spezifische Oberfläche, bedingt durch eine blumenkohlartige Morphologie, gekennzeichnet. Da die realisierbare Stromdichte von Elektrodenmaterialien u. a. mit der spezifischen Oberfläche skaliert, sind solchermaßen strukturierte Materialien auch für die Erzielung relativ hoher Leistungen, wie sie z.B. für Automobilantriebsbatterien erforderlich sind, geeignet.

Die erfindungsgemäßen Lithiumsulfid/Kohlenstoff-Kompositmaterialien werden für die Herstellung von Lithiumbatterieelektroden oder die Herstellung von lithiumionenleitfähigen Feststoffen, beispielsweise zur Verwendung als Separator in Lithiumbatterien eingesetzt.

Die Erfindung wird nachfolgend an Hand von 3 Beispielen, zwei Vergleichsbeispielen sowie 10 Abbildungen näher erläutert.
Die Untersuchungen der Kristallstruktur und die Zuordnung erfolgte mit einem Gerät der Firma Bruker AXS (Discover D8); Cu K-α-Strahlung, Sol X-Detektor unter den Bedingungen: Start: 5 ° - Ende: 75. ° (2 theta Meßbereich); 2 s Meßzeit / 0,02° Meßschritt; Temp.: 25 °C

Es zeigen:
- Abbildung 1 -: UEL 10 153 (Li₂S aus Li und S)kristalline Phase - Li₂S - Lithiumsulfid (rote Striche)
- Abbildung 2 -: Scanning electron microscope (SEM)-Aufnahme von Beispiel 1
- Abbildung 3 -: UEL 10 162 (Li₂S aus Li und S kristalline Phase - Li₂S - Lithiumsulfid (rote Striche)
- Abbildung 4 -: SEM-Aufnahme von Beispiel 2
- Abbildung 5 -: UEL 11 044 (graue Probe) kristalline Phase - Li₂S - Lithiumsulfid (rote Striche)
- Abbildung 6 -: SEM-Aufnahme von Beispiel 3
- Abbildung 7 -: UEL 11 043 kristalline Phase - Li₂S - Lithiumsulfid (rote Striche); S - Schwefel (grüne Striche); LiH - Lithiumhydrid (blaue Striche; Li₂C₂ - Lithiumacetylid (orange Striche
- Abbildung 8 -: SEM-Aufnahme von Vergleichsbeispiel 1
- Abbildung 9 -: UEL 11 042 (ockerfarbene Probe) - Li₂S - Lithiumsulfid (rote Striche); Li - Lithium (grüne Striche); LiH - Lithiumhydrid (blaue Striche)
- Abbildung 10 -: SEM-Aufnahme von Vergleichsbeispiel 2

### Beispiel 1: Herstellung von Li₂S/C-Komposit aus Schwefel und Lithiumpulver bei ca. 140 °C in Paraffinöl, Vorlage von Schwefel

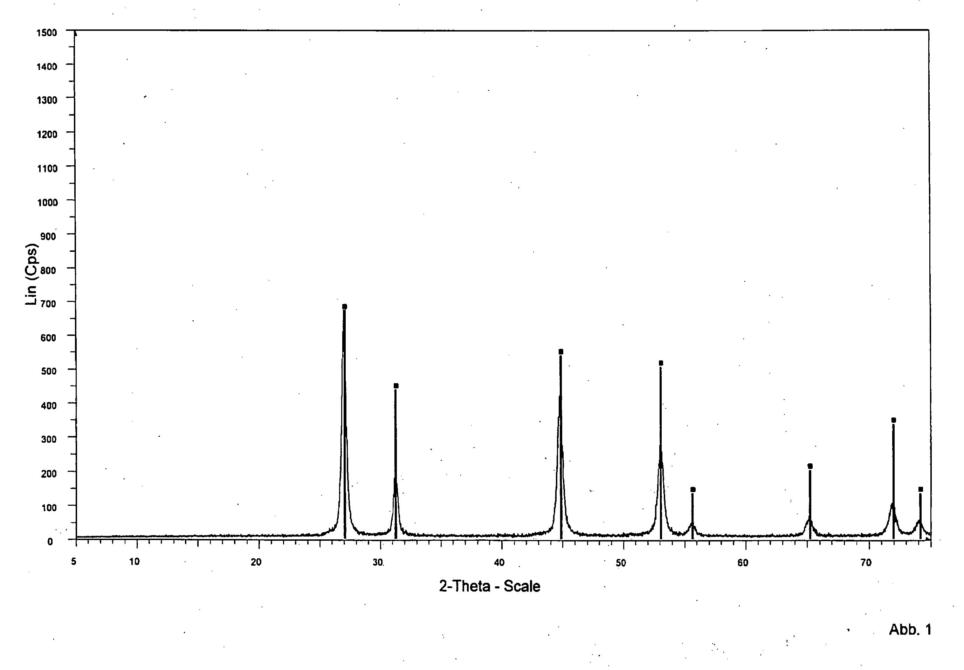

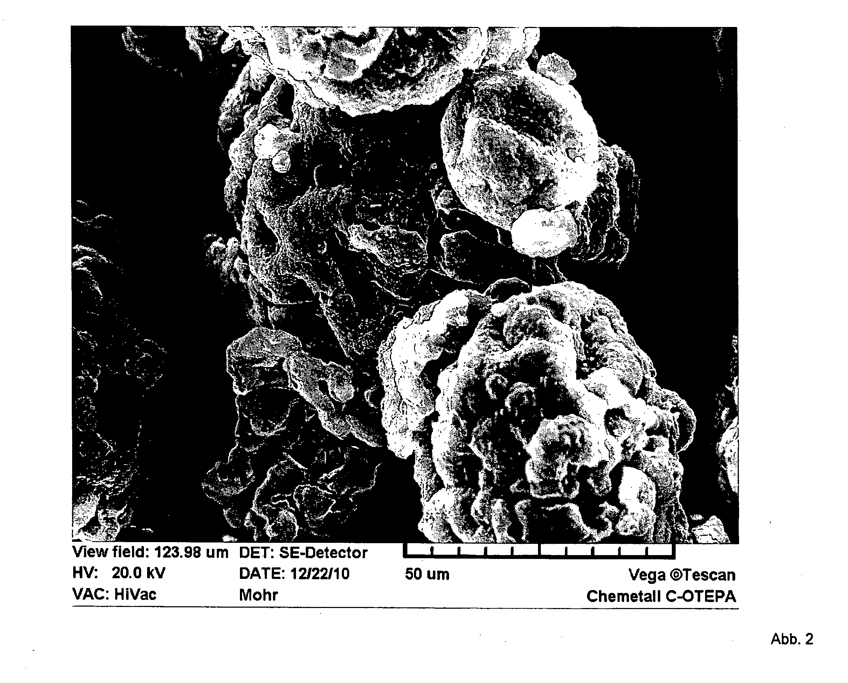

In einem inertisierten (d.h. wasser- und luftfreiem, mit Ar gefüllten) Edelstahl-Doppelmantelreaktor wurden 19,8 g Schwefelgranulat in 520 g Shellsol^{®} D100 vorgelegt und unter Rühren bei 140 °C Manteltemperatur aufgeschmolzen bzw. gelöst. Dann wurden 8,33 g Lithiumpulver portionsweise (1 g pro Mol) durch eine Reaktoröffnung zugegeben. Die Reaktion war exotherm, erkennbar an einem Anstieg der Innentemperatur von 136 °C auf knapp 140 °C. Nach Zugabe der letzten Portion wurde noch 1 h bei 150 °C nachgerührt, dann auf 80 °C abgekühlt und die Suspension mittels Teflontauchrohr auf eine Filterfritte gedrückt, gewaschen (erst mit Shellsol^{®}, dann dreimal mit Pentan) und bei Raumtemperatur (RT) bis zur Gewichtskonstanz getrocknet. Es wurde eine quantitative Produktausbeute (99,8 % der Theorie) erhalten. Das Pulver war frei fließend mit einem Graubraunstich.
XRD: phasenreines Lithiumsulfid (Abb. 1)
SEM: blumenkohlartige Oberflächenstruktur (Abb. 2)

### Beispiel 2: Herstellung von Li₂S/C-Komposit aus Schwefel und Lithiumpulver bei ca. 190 °C in Paraffinöl, Vorlage von Lithium

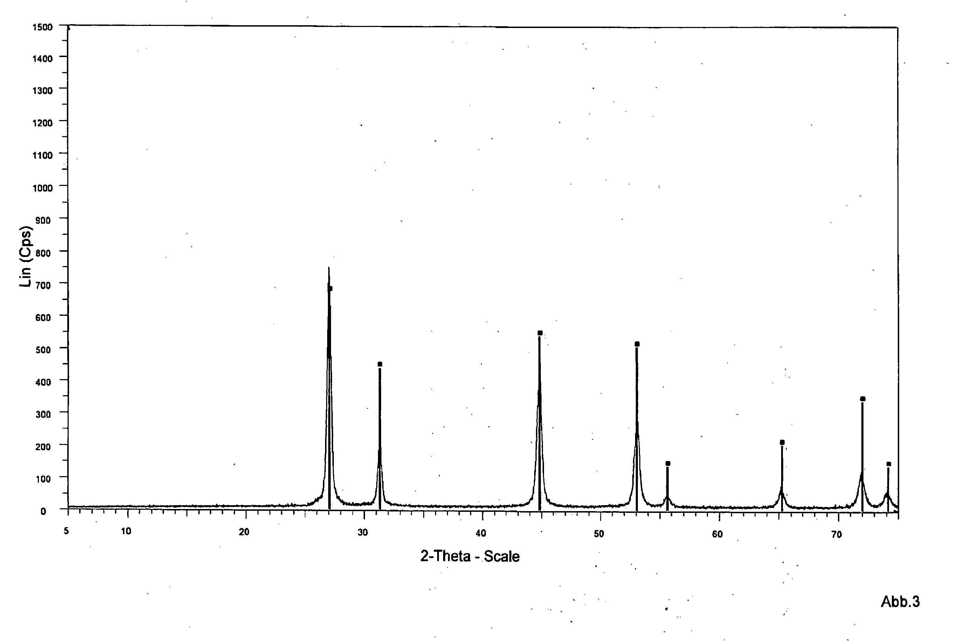

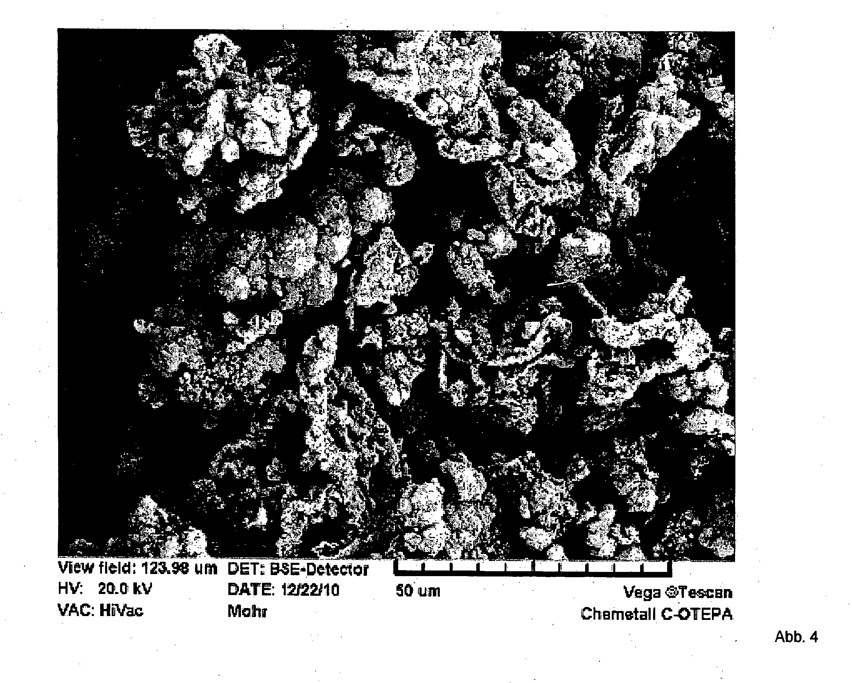

Im Reaktor gemäß Beispiel 1 wurden 9,24 g Lithiummetall in 497 g Shellsol^{®} D100 aufgeschmolzen. Bei einer Innentemperatur von etwa 190°C wurden 21,98 g Schwefelgranulat in mehreren Portionen innerhalb etwa 1 h unter gutem Rühren zudosiert. Nach Zugabeende wurde noch 2 h bei 190°C nachgerührt und dann abgekühlt. Nach Filtration und Vakuumtrocknung wurden 32,1 g eines dunkelgrauen, gut fließfähigen Pulvers erhalten.
XRD: phasenreines Lithiumsulfid (Abb. 3)
SEM: blumenkohlartige Oberflächenstruktur (Abb. 4)
C-Gehalt: 4,7 %
Li-Gehalt 41,1 mmol/g; S-Gehalt 20,5 mmol/g (→ Li₂S-Gehalt 94 %)

### Beispiel 3: Herstellung von Li₂S/C-Komposit aus Schwefel/Kohlenstoffdisulfid und Lithiumpulver bei 190 °C in Paraffinöl, Vorlage von Lithium und Nachreaktion bei 190 °C

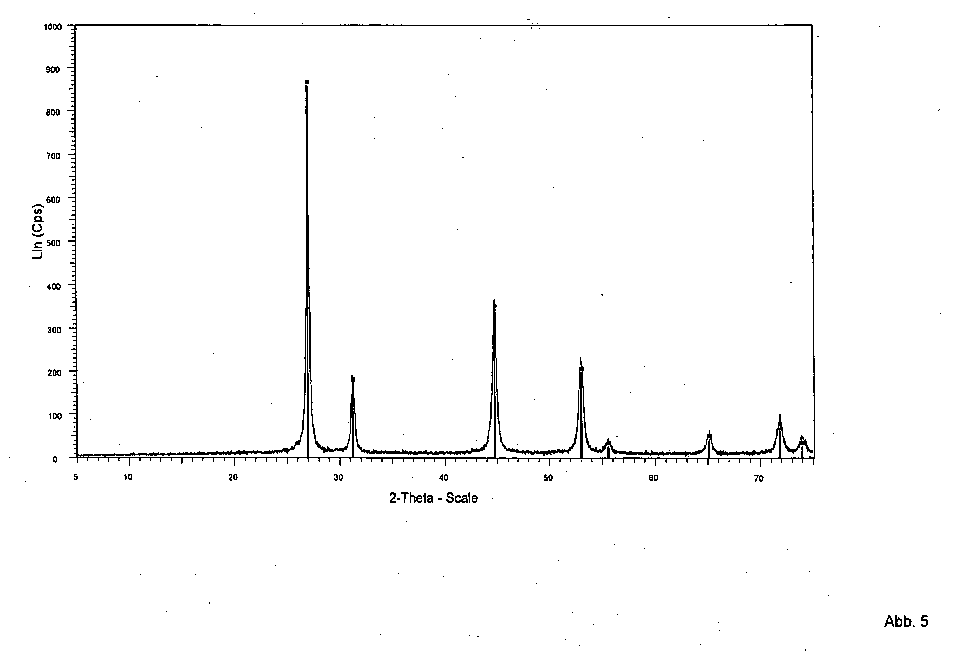

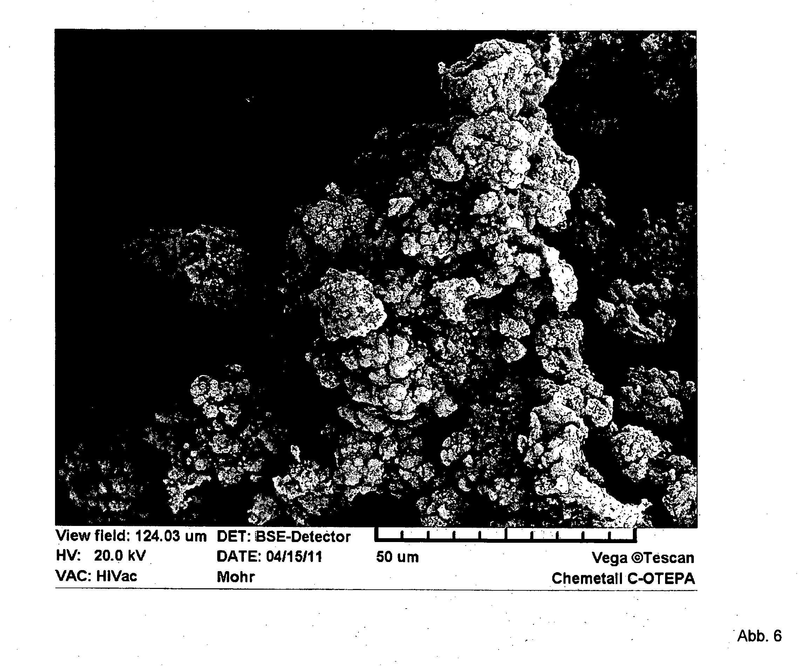

Im Reaktor gemäß Beispiel 1 wurden 9,98 g Lithium in 504 g Shellsol^{®} D-100 aufgeschmolzen. Bei einer Innentemperatur von 185°C wurden 15,8 g Schwefelgranulat unter gutem Rühren portionsweise zugegeben. Dann wurden 5,6 g Kohlenstoffdisulfid als 30%ige Lösung in Shellsol^{®} D100 innerhalb von 15 Minuten zugetropft. Nach Beendigung des Zutropfens wurde weiterer Schwefel (8,0 g) zugegeben. Nach 2-stündigem Rühren bei 190°C wurde abgekühlt und das Produkt isoliert (35,1 g fast schwarzes Pulver).
XRD: phasenreines Lithiumsulfid (Abb. 5)
SEM: blumenkohlartige Oberflächenstruktur (Abb. 6)
C-Gehalt: 7,2 %
Li-Gehalt 39,9 mmol/g; S-Gehalt 20,0 mmol/g (→ Li₂S-Gehalt 92 %)

### Vergleichsbeispiel 1: Herstellung von Li₂S/C-Komposit aus Schwefel und Lithiumpulver bei ca. 190°C in Biphenyl

Im Reaktor gemäß Beispiel 1 wurden 7,67 g Lithium in 450 g Biphenyl aufgeschmolzen. Bei einer Innentemperatur von ca. 190°C wurden 18,25 g Schwefelgranulat innerhalb von 1 h portionsweise zudosiert. Nach Dosierende wurde noch 2 h bei 190°C weitergerührt.

Es wurde auf 120°C abgekühlt und 500 ml Dekan zugegeben (zur Erstarrungsvermeidung). Dann wurde heiß filtriert, mit Heptan gewaschen und der Filterrückstand vakuumgetrocknet.

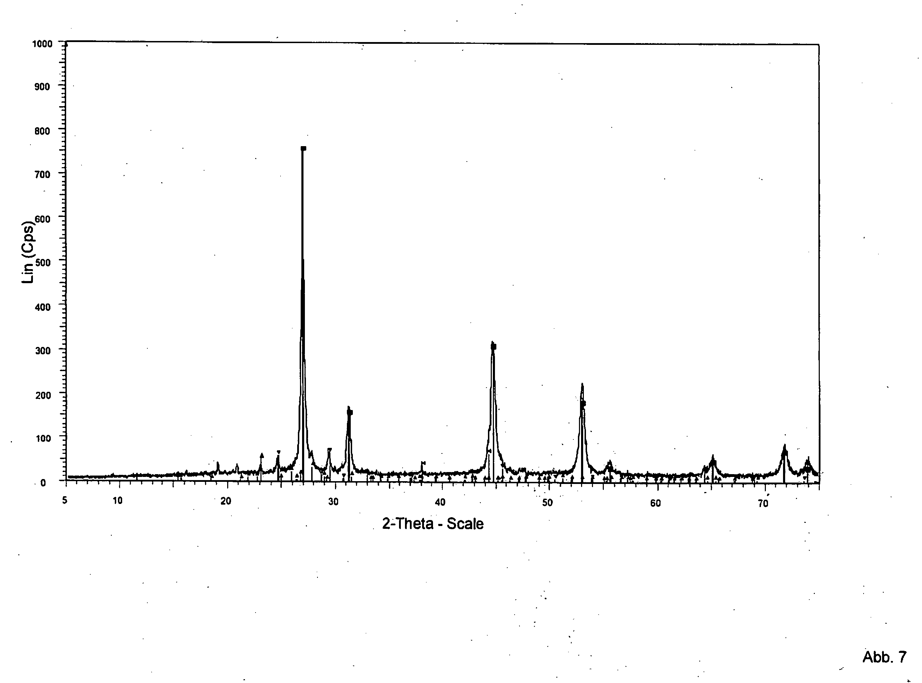

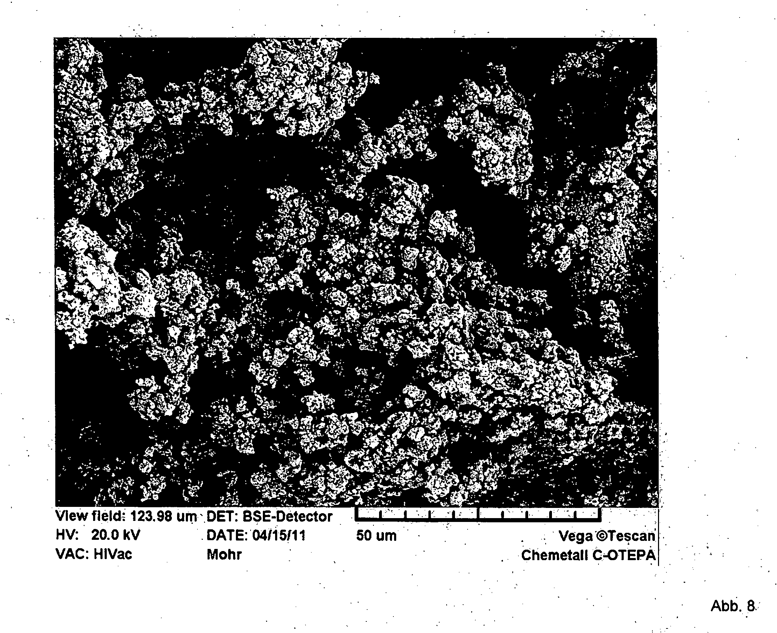

Es wurden 25,8 g eines dunkelgrauen Produktes erhalten
XRD: mit LiH und Li₂C₂ verunreinigtes Lithiumsulfid (Abb. 7)
SEM: blumenkohlartige Oberflächenstruktur (Abb. 8)
C-Gehalt: 6 %
Li-Gehalt 40,0 mmol/g; S-Gehalt 10,0 mmol/g

### Vergleichsbeispiel 2: Herstellung von Li₂S/C-Komposit aus Schwefel und Lithiumpulver bei 190°C in Tetralin

Im Reaktor gemäß Beispiel 1 wurden 8,92 g Lithium in 556 g Tetralin aufgeschmolzen. Bei einer Innentemperatur von 190°C wurden 21,22 g Schwefelgranulat innerhalb von ca. 1 h portionsweise zudosiert. Nach Dosierende wurde noch 2 h bei 190°C weitergerührt.

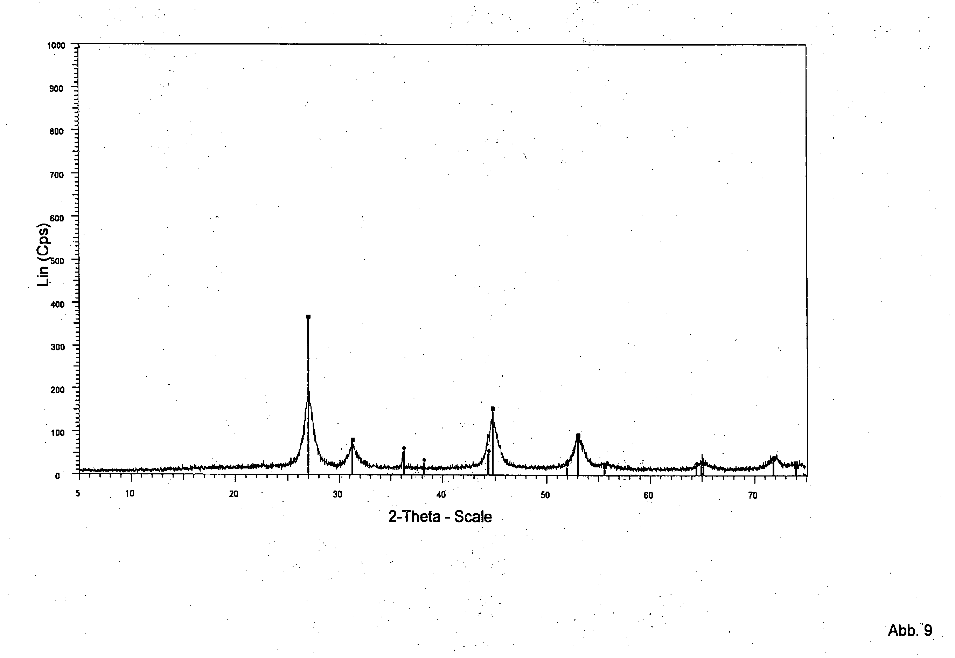

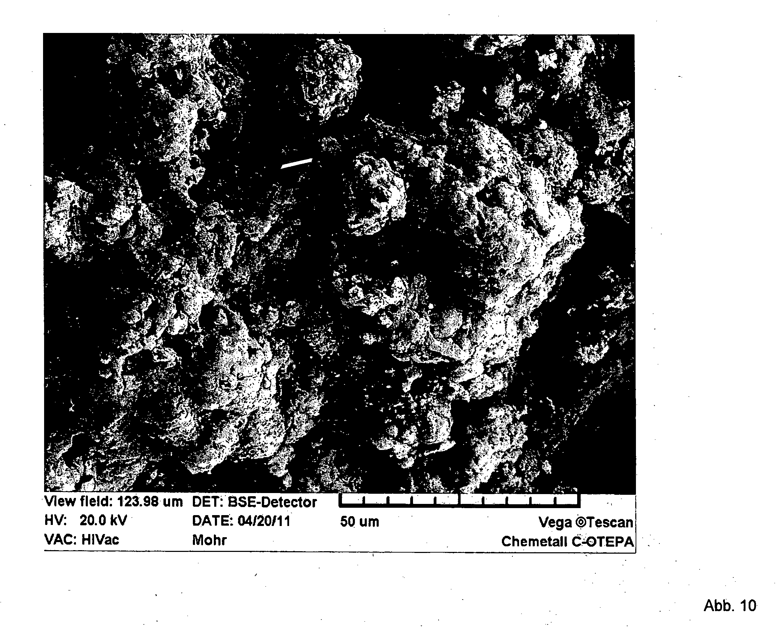

Es wurde auf 80°C abgekühlt und dann warm filtriert, mit Heptan gewaschen und der Filterrückstand vakuumgetrocknet. Es wurden 25,4 g eines ockergelben Produktes erhalten.
XRD: mit LiH und metallischem Lithium verunreinigtes Lithiumsulfid (Abb. 9)
SEM: blumenkohlartige Oberflächenstruktur (Abb. 10)
C-Gehalt: 1,1 %
Li-Gehalt 41,5 mmol/g; S-Gehalt 12,0 mmol/g

Die Beispiele zeigen, dass sich bei der Verwendung von gesättigten Kohlenwasserstofflösungsmitteln phasenreine Lithiumsulfidpulver mit großer spezifischer Oberfläche bilden. Bei der Verwendung von CS₂ steigt der Kohlenstoffgehalt im Produkt. Der Kohlenstoff liegt größtenteils in elementarer Form, vermutlich in graphitischer Modifikation vor. Wird ein aromatisches Lösungsmittel wie Biphenyl verwendet, so bildet sich ebenfalls ein C-dotiertes Lithiumsulfid, jedoch ist dieses Produkt mit deutlichen Anteilen von kristallinem Lithiumcarbid und Lithiumhydrid verunreinigt. Beim Einsatz eines teilaromatischen Lösungsmittels wie Tetralin ist die Umsetzung nicht vollständig (es verbleibt elementares Lithium im Produkt) und es bildet sich als Nebenprodukt Lithiumhydrid. Der C-Gehalt ist deutlich niedriger als bei Verwendung eines gesättigten Kohlenwasserstofflösungsmittels. Die Umsetzung kann durch längere Reaktionszeiten und oder Stöchiometrieänderungen vervollständigt werden.

## Patentansprüche

1. Verfahren zur Herstellung eines kohlenstoffdotierten Lithiumsulfidpulvers, **dadurch gekennzeichnet, dass** elementares Lithium mit elementarem Schwefel und/oder einer schwefelhaltigen Verbindung ausgewählt aus der Gruppe CS₂, COS, SO₂ und SO in flüssigem Zustand in einem aliphatischen oder cycloaliphatischen Kohlenwasserstofflösungsmittel umgesetzt wird.

2. Verfahren nach Anspruch 1, **dadurch gekennzeichnet, dass** die Umsetzung bei Temperaturen von 120°C bis 300°C, bevorzugt von 150°C bis 250°C und besonders bevorzugt von 180°C bis 200°C vorgenommen wird.

3. Verfahren nach Anspruch 1 oder 2, **dadurch gekennzeichnet, dass** als Kohlenwasserstofflösungsmittel gesättigte Lösungsmittel verwendet werden, die bei den.Umsetzungsbedingungen flüssig sind, die also Siedepunkte von mindestens 120°C, besser mindestens 150°C und besonders bevorzugt Siedepunkte > 180°C aufweisen.

4. Verfahren nach mindestens einem der Ansprüche 1 bis 3, **dadurch gekennzeichnet, dass** als Kohlenwasserstofflösungsmittel ausgewählt aus der Gruppe bestehend aus Octan, Nonan, Decan, Undekan, Dodecan oder beliebige Mischungen dieser genannten Verbindungen, eingesetzt werden.

5. Verfahren nach mindestens einem der Ansprüche 1 bis 4, **dadurch gekennzeichnet, dass** als Kohlenwasserstofflösungsmittel kommerziell erhältliche Paraffin-Siedeschnitte verwendet werden.

6. Verfahren nach mindestens einem der Ansprüche 1 bis 5, **dadurch gekennzeichnet, dass** als Schwefelquelle eine Mischung bestehend aus Schwefel und Kohlenstoffdisulfid eingesetzt wird.

7. Verfahren nach mindestens einem der Ansprüche 1 bis 6, **dadurch gekennzeichnet, dass** die Schwefelquelle mindestens mit der für eine vollständige Umsetzung notwendigen Stöchiometrie oder im Überschuss von 1 bis 30 Mol-% eingesetzt wird.

8. Verfahren nach mindestens einem der Ansprüche 1 bis 7, **dadurch gekennzeichnet, dass** das Molverhältnis zwischen Schwefel und Kohlenstoffdisulfid zwischen 99:1 und 1:99, besonders bevorzugt zwischen 50:50 und 95:5 variiert.

9. Verfahren nach mindestens einem der Ansprüche 1 bis 8, **dadurch gekennzeichnet, dass** es als einstufiges Verfahren, insbesondere als Eintopfverfahren durchgeführt wird.

10. Lithiumsulfid/Kohlenstoff-Kompositmaterial erhältlich durch ein Verfahren gemäß mindestens einem der Ansprüche 1 bis 9, **dadurch gekennzeichnet, dass** es eine hohe spezifische Oberfläche und eine blumenkohlartige Oberflächenstruktur aufweist.

11. Lithiumsulfid/Kohlenstoff-Kompositmaterial nach Anspruch 10, **dadurch gekennzeichnet, dass** es einen Kohlenstoffgehalt von 0,5 bis 50 %, bevorzugt von 1 bis 20 % aufweist.

12. Lithiumsulfid/Kohlenstoff-Kompositmaterial nach den Anspruch 10 oder 11, **dadurch gekennzeichnet, dass** es nach XRD-Messungen außer Lithiumsulfid keine weitere kristalline Phase enthält.

13. Verwendung des Lithiumsulfid/Kohlenstoff-Kömpositmaterials gemäß mindestens einem der Ansprüche 10 bis 12 für die Herstellung von Lithiumbatterieelektroden.

14. Verwendung des Lithiumsulfid/Kohlenstoff-Kompositmaterials gemäß mindestens einem der Ansprüche 10 bis 12 für die Herstellung eines lithiumionenleitfähigen Feststoffes.

15. Verwendung des Lithiumsulfid/Kohlenstoff-Kompositmaterials nach Anspruch 14 als Separator in Lithiumbatterien.

## Claims

1. A method for producing a carbon-doped lithium-sulphide powder, **characterised in that** elemental lithium is reacted with elemental sulphur and/or a sulphur-containing compound selected from the group CS₂, COS, SO₂ and SO in a liquid state in an aliphatic or cycloaliphatic hydrocarbon solvent.

2. A method according to claim 1, **characterised in that** the reaction is effected at temperatures of 120°C to 300°C, preferably of 150°C to 250°C and particularly preferably of 180°C to 200°C.

3. A method according to claim 1 or 2, **characterised in that** saturated solvents that are liquid in the reaction conditions, that have therefore boiling points of at least 120°C, preferably at least 150°C, and particularly preferably boiling points > 180°C, are used as hydrocarbon solvents.

4. A method according to at least one of claims 1 to 3, **characterised in that** the hydrocarbon solvents used are selected from the group consisting of octane, nonane, decane, undecane, dodecane or any mixtures of these compounds mentioned.

5. A method according to at least one of claims 1 to 4, **characterised in that** commercially obtainable paraffin boiling cuts are used as hydrocarbon solvents.

6. A method according to at least one of claims 1 to 5, **characterised in that** a mixture consisting of sulphur and carbon disulphide is used as the sulphur source.

7. A method according to at least one of claims 1 to 6, **characterised in that** the sulphur source is used at least with the stoichiometry that is necessary for a complete reaction or in an excess of 1 to 30 mol%.

8. A method according to at least one of claims 1 to 7, **characterised in that** the molar ratio between sulphur and carbon disulphide varies between 99:1 and 1:99, particularly preferably between 50:50 and 95:5.

9. A method according to at least one of claims 1 to 8, **characterised in that** it is carried out as a single-stage method, in particular as a one-pot method.

10. A lithium-sulphide/carbon composite material obtainable by means of a method in accordance with at least one of claims 1 to 9, **characterised in that** it has a high specific surface area and a cauliflower-like surface structure.

11. A lithium-sulphide/carbon composite material according to claim 10, **characterised in that** it has a carbon content of 0.5 to 50%, preferably of 1 to 20%.

12. A lithium-sulphide/carbon composite material according to claim 10 or 11, **characterised in that** after XRD measurements apart from lithium sulphide it contains no further crystalline phase.

13. Use of the lithium-sulphide/carbon composite material in accordance with at least one of claims 10 to 12 for the production of lithium battery electrodes.

14. Use of the lithium-sulphide/carbon composite material in accordance with at least one of claims 10 to 12 for the production of a lithium-ion-conductive solid.

15. Use of the lithium-sulphide/carbon composite material according to claim 14 as a separator in lithium batteries.

## Revendications

1. Procédé de production d'une poudre de sulfure de lithium dopée au carbone, **caractérisé en ce que** du lithium élémentaire est transformé avec du soufre élémentaire et/ou un composé soufré, sélectionné dans le groupe comprenant CS₂, COS, SO₂ et SO, à l'état liquide, dans un solvant hydrocarbure aliphatique ou cycloaliphatique.

2. Procédé selon la revendication 1, **caractérisé en ce que** la transformation est effectuée à des températures allant de 120 °C à 300 °C, de préférence de 150 °C à 250 °C et de façon particulièrement avantageuse de 180 °C à 200 °C.

3. Procédé selon la revendication 1 ou 2, **caractérisé en ce que** l'on utilise en tant que solvant hydrocarbure des solvants saturés qui sont liquides dans les conditions de transformation, c'est-à-dire qui présentent des points d'ébullition d'au moins 120 °C, de préférence d'au moins 150 °C et de façon particulièrement avantageuse des points d'ébullition > 180°C.

4. Procédé selon au moins une des revendications 1 à 3, **caractérisé en ce que** l'on utilise en tant que solvant hydrocarbure choisi dans le groupe constitué d'octane, nonane, décane, undécane, dodécane ou de n'importe quels mélanges de ces composés cités.

5. Procédé selon au moins une des revendications 1 à 4, **caractérisé en ce que** l'on utilise en tant que solvant hydrocarbure des fractions d'ébullition de paraffine disponibles dans le commerce.

6. Procédé selon au moins une des revendications 1 à 5, **caractérisé en ce que** l'on utilise en tant que source de soufre un mélange constitué de soufre et de bisulfure de carbone.

7. Procédé selon au moins une des revendications 1 à 6, **caractérisé en ce que** l'on utilise la source de soufre au moins avec la stoechiométrie nécessaire à une transformation complète ou en excédent allant jusqu'à 30 % molaire.

8. Procédé selon au moins une des revendications 1 à 7, **caractérisé en ce que** le rapport molaire entre le soufre et le bisulfure de carbone varie entre 99:1 et 1:99, de façon particulièrement avantageuse entre 50:50 et 95:5.

9. Procédé selon au moins une des revendications 1 à 8, **caractérisé en ce qu'**il est mis en oeuvre comme procédé à un niveau, en particulier comme procédé à pot unique.

10. Matériau composite de sulfure de lithium/carbone pouvant être obtenu par un procédé selon au moins une des revendications 1 à 9, **caractérisé en ce qu'**il présente une surface spécifique élevée et une structure de surface d'aspect en choufleur.

11. Matériau composite de sulfure de lithium/carbone selon la revendication 10, **caractérisé en ce qu'**il présente une teneur en carbone comprise entre 0,5 et 50 %, de préférence entre 1 et 20 %.

12. Matériau composite de sulfure de lithium/carbone selon la revendication 10 ou 11, **caractérisé en ce que** d'après des analyses DRX il ne contient pas d'autre phase cristalline en dehors du sulfure de lithium.

13. Utilisation du matériau composite de sulfure de lithium/carbone selon au moins une des revendications 10 à 12, pour la production d'électrodes de piles au lithium.

14. Utilisation du matériau composite de sulfure de lithium/carbone selon au moins une des revendications 10 à 12, pour la production d'une matière solide conductrice d'ions de lithium.

15. Utilisation du matériau composite de sulfure de lithium/carbone selon la revendication 14, en tant que séparateur dans des batteries au lithium.
